# EUROPEAN PATENT APPLICATION

(11) **EP 4 417 581 A1**
(43) Date of publication of application: **21.08.2024**
(21) Application number: 22880682.4
(22) Date of filing: 08.09.2022
(51) Int. Cl.: C01G 51/10, B01D 9/02, B04B 3/00, B04B 15/12, C22B 3/44, C22B 23/00

(54) **METHOD FOR PRODUCING COBALT SULFATE CRYSTAL**

(30) Priority: 14.10.2021 JP 2021168713
(71) Applicant: Tsukishima Kikai Co., Ltd., Tokyo 104-0053 (JP)
(72) Inventor: OKUYAMA Hiroki, Tokyo 104-0053 (JP); HARUTA Tomoaki, Tokyo 104-0053 (JP); OGAWA Ayako, Tokyo 104-0053 (JP)
(74) Representative: Müller-Boré & Partner Patentanwälte PartG mbB
(86) International application number: PCT/JP2022/033697
(87) International publication number: WO 2023/062986

(57) **Abstract**

A method (40) for producing a cobalt sulfate crystal, which is performed for obtaining crystals of a cobalt sulfate heptahydrate from a cobalt sulfate-containing aqueous solution, the method includes a crystallization step (10) of subjecting a cobalt sulfate-containing aqueous solution (11) to evaporative concentration to obtain a slurry (12) containing cobalt sulfate crystals, a separation step (20) of subjecting the slurry (12) obtained in the crystallization step (10) to solid-liquid separation to obtain a dewatered cake (21) of the cobalt sulfate crystals, and a drying step (30) of drying the dewatered cake (21) obtained in the separation step (20) by a flash drying of bringing the dewatered cake (21) into direct contact with a drying medium (31) to obtain the cobalt sulfate crystals (41).

## Description

### [Technical Field]

The present invention relates to a method for producing a cobalt sulfate crystal.

Priority is claimed on Japanese Patent Application No. 2021-168713, filed on October 14, 2021, the content of which is incorporated herein by reference.

### [Background Art]

In a secondary battery such as a lithium-ion battery, a rare metal such as cobalt is used as an active material. For example, Patent Document 1 discloses a method for producing a cobalt sulfate crystal (CoSO₄·7H₂O) by electrolytically producing cobalt sulfate using sulfuric acid and metal cobalt and then performing evaporative concentration.

In recent years, collection of various metals from waste has been studied. For example, Patent Document 2 discloses that, in order to produce nickel sulfate, manganese sulfate, lithium sulfate, or cobalt sulfate from electrical waste, these metal sulfates are extracted into an organic phase using an extractant such as a phosphate ester.

In drying of a wet substance in the chemical industry, a method of using heat quantity of hot air for evaporation of moisture are widely used. For example, Patent Document 3 discloses a dryer using a spiral flow. In addition, as disclosed in Patent Document 4, a continuous centrifugal separator including a perforated basket or a metal screen is known for solid-liquid separation of a slurry.

### [Citation List]

### [Patent Documents]

[Patent Document 1]
   Japanese Unexamined Patent Application First Publication No. S57-57876
[Patent Document 2]
   Published Japanese Translation No. 2019-530795 of the PCT International Publication
[Patent Document 3]
   Japanese Unexamined Patent Application, Second Publication No. H8-27132
[Patent Document 4]
   Japanese Unexamined Patent Application, First Publication No. 2018-1116

### [Summary of Invention]

### [Technical Problem]

As a cobalt sulfate (II), an anhydrous salt, a monohydrate, a hexahydrate, and a heptahydrate are known. The cobalt sulfate heptahydrate is easily affected by a relative humidity in the air, and in a case of being left in an environment with a low relative humidity, the cobalt sulfate heptahydrate is subjected to efflorescence and easily changed to cobalt sulfate hexahydrate. In a case where cobalt sulfate crystals are in a mixed state of the cobalt sulfate heptahydrate and the cobalt sulfate hexahydrate, a cobalt content in the cobalt sulfate crystals changes depending on the mixing ratio of the cobalt sulfate heptahydrate and the cobalt sulfate hexahydrate, which causes inconvenience in production management of a product using the cobalt sulfate crystals as a raw material.

The present invention is made in view of such a background, and an object of the present invention is to provide a method for producing a cobalt sulfate crystal, which is capable of suppressing efflorescence of cobalt sulfate crystals.

### [Solution to Problem]

In order to achieve such an object by solving the problems described above, the present invention proposes the following aspects.

A first aspect of the present invention is a method for producing a cobalt sulfate crystal, which is performed for obtaining crystals of a cobalt sulfate heptahydrate from a cobalt sulfate-containing aqueous solution, the method including a crystallization step of subjecting a cobalt sulfate-containing aqueous solution to evaporative concentration to obtain a slurry containing cobalt sulfate crystals; a separation step of subjecting the slurry obtained in the crystallization step to solid-liquid separation to obtain a dewatered cake of the cobalt sulfate crystals; and a drying step of drying the dewatered cake obtained in the separation step by a flash drying of bringing the dewatered cake into direct contact with a drying medium to obtain the cobalt sulfate crystals.

According to the first aspect, since the cobalt sulfate crystals are dried by the flash drying operation in which the dewatered cake is in contact with the drying medium for a short time, it is possible to suppress the efflorescence of the cobalt sulfate crystals.

A second aspect of the present invention is the method for producing a cobalt sulfate crystal according to the first aspect, in which, in the drying step, a spiral flow dryer is used.

According to the second aspect, since the dewatered cake is fed into the spiral flow dryer in which the drying medium flows rapidly and thus a mixed state of the drying medium and the dewatered cake is formed instantaneously, drying efficiency is increased and a drying time and a contact time with the drying medium can be shortened, and as a result, the drying efficiency can be increased while suppressing loss of crystal water.

A third aspect of the present invention is the method for producing a cobalt sulfate crystal according to the first aspect or the second aspect, in which, in the drying step, a mechanism of adjusting a retention time of the dewatered cake in a dryer is used.

According to the third aspect, by adjusting the retention time by utilizing a mass of the dewatered cake in the dryer and a centrifugal force which acts on the dewatered cake due to the spiral flow when the dewatered cake passes through the apparatus, variation in degree of drying can be suppressed and the drying efficiency can be increased.

A fourth aspect of the present invention is the method for producing a cobalt sulfate crystal according to any one of the first to third aspects, in which the temperature of the drying medium is 25°C to 65°C.

According to the fourth aspect, by adjusting the temperature of the drying medium according to an amount of moisture attached to the dewatered cake and the flow velocity of the drying medium, the efflorescence of the cobalt sulfate crystals can be suppressed.

A fifth aspect of the present invention is the method for producing a cobalt sulfate crystal according to any one of the first to fourth aspects, in which the flow velocity of the drying medium is 10 to 50 m/sec.

According to the fifth aspect, by adjusting the flow velocity of the drying medium according to the amount of moisture attached to the dewatered cake and the temperature of the drying medium, the efflorescence of the cobalt sulfate crystals can be suppressed.

A sixth aspect of the present invention is the method for producing a cobalt sulfate crystal according to any one of the first to fifth aspects, in which, in the separation step, a centrifugal separator having a perforated basket or a metal screen is used.

According to the sixth aspect, the cobalt sulfate crystals can be continuously collected from the slurry, and by changing a rotation speed of the perforated basket or the metal screen, an amount of moisture attached to the cobalt sulfate crystals collected from the slurry as the dewatered cake can be adjusted.

A seventh aspect of the present invention is the method for producing a cobalt sulfate crystal according to any one of the first to sixth aspects, in which a mass fraction of the crystals of the cobalt sulfate heptahydrate, excluding crystal-attached water, is 99.9% or more.

According to the seventh aspect, it is possible to provide crystals of a cobalt sulfate heptahydrate with high quality.

An eighth aspect of the present invention is the method for producing a cobalt sulfate crystal according to any one of the first to seventh aspects, in which the cobalt sulfate-containing aqueous solution contains 15wt% to 25wt% of cobalt sulfate.

According to the eighth aspect, it is possible to efficiently perform the crystallization step of the cobalt sulfate crystals by the evaporative concentration.

A ninth aspect of the present invention is the method for producing a cobalt sulfate crystal according to any one of the first to eighth aspects, in which the cobalt sulfate-containing aqueous solution contains 15wt% to 25wt% of cobalt sulfate which is obtained by treating a lithium-ion battery waste material containing at least cobalt with a solvent extraction method.

According to the ninth aspect, it is possible to effectively use resources by extracting cobalt sulfate from a waste material.

### [Advantageous Effects of Invention]

According to the present invention, it is possible to provide a method for producing a cobalt sulfate crystal, which is capable of suppressing efflorescence of cobalt sulfate crystals.

### [Brief Description of Drawings]

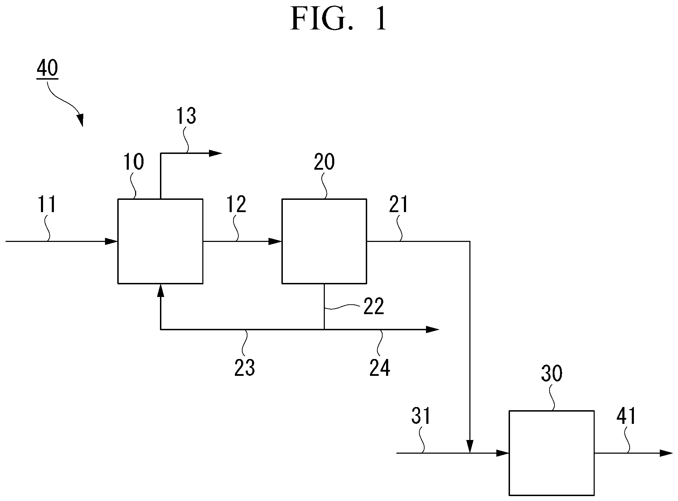

FIG. 1 is a conceptual diagram showing an outline of a method for producing a cobalt sulfate crystal according to an embodiment.

### [Description of Embodiments]

Hereinafter, the present invention is described based on preferred embodiments. FIG. 1 shows an outline of the embodiment. A method 40 for producing a cobalt sulfate crystal according to the embodiment is a method for obtaining crystals of a cobalt sulfate heptahydrate, as cobalt sulfate crystals 41, from a cobalt sulfate-containing aqueous solution 11, and the method 40 includes a crystallization step 10, a separation step 20, and a drying step 30 in this order.

### <Cobalt sulfate-containing aqueous solution>

The cobalt sulfate-containing aqueous solution 11 may be a solution obtained by dissolving a cobalt compound, metal cobalt, a cobalt alloy, or the like in sulfuric acid, or may be a solution obtained by treating a cobalt-containing raw material such as an ore, a waste material, or a waste reagent. In addition, the obtained solution is generally adjusted to be weakly acidic or neutral pH by a neutralization operation or the like. The waste material is not particularly limited, and examples thereof include waste materials generated from secondary batteries such as lithium-ion batteries, and from electronic devices. By extracting cobalt from the waste material, resources can be effectively used.

In order to extract the cobalt from the cobalt-containing raw material, a desired operation can be used as necessary. Examples thereof include a roasting step, a pulverizing step, a leaching step, a neutralization step, and an electrolysis step.

In a case where the cobalt-containing raw material contains other metals such as manganese, nickel, lithium, aluminum, iron, copper, lead, zinc, calcium, and magnesium, a step of extracting the other metals or a step of separating the other metals from the cobalt sulfate-containing aqueous solution 11 may be performed. The extraction step is not particularly limited, and an appropriate chemical agent such as an acid, an alkali, an oxidizing agent, or a reducing agent can be used as necessary.

It is preferable to perform a purification step in which a cobalt sulfate content in the cobalt sulfate-containing aqueous solution 11 is increased and an amount of impurities is reduced, in advance of the crystallization step 10. The purification step of the cobalt sulfate-containing aqueous solution 11 is not particularly limited, and at least one or more steps such as solid-liquid separation, solvent extraction, pH adjustment, and column treatment are exemplary examples.

In the solvent extraction, an organic solvent containing a phosphoric acid-based extractant, a phosphonic acid-based extractant, a phosphinic acid-based extractant, an amine-based extractant, a carboxylic acid-based extractant, a chelate-based extractant, an acidic extractant, a neutral extractant, or the like can be used. In the solvent extraction, a liquid such as an aromatic hydrocarbon, a paraffin-based hydrocarbon, or a naphthene-based hydrocarbon may be used as a diluent. In the solvent extraction, it is possible to selectively extract the cobalt by utilizing a difference in separation coefficient with respect to the kind of metal by selecting an extractant, adjusting the pH, selecting a coexisting substance, or the like. The solvent extraction may be performed two or more times using the same or different extractants. In the solvent extraction, two or more kinds of extractants or two or more kinds of diluents may be mixed and used.

It is possible to perform back extraction from the organic phase containing cobalt ions into the water phase to obtain the cobalt sulfate-containing aqueous solution 11. As necessary, the above-described purification step may be performed on a back extraction solution obtained by back-extracting the organic phase containing the cobalt ions into the water phase. In a case where the cobalt ions form a sulfate before the solvent extraction, the solvent extraction and the back extraction may be performed while the cobalt ions form the cobalt sulfate. A counter ion of the cobalt ion in the organic phase may be a chloride ion or the like. An anion other than the sulfate ion can be converted into cobalt sulfate by exchanging the counter ion using an aqueous solution containing sulfuric acid at the time of the back extraction.

### <Crystallization step>

The crystallization step 10 is a step of subjecting the cobalt sulfate-containing aqueous solution 11 to evaporative concentration to obtain a slurry 12 containing cobalt sulfate crystals. The cobalt sulfate-containing aqueous solution 11 used in the crystallization step 10 is an aqueous solution containing cobalt sulfate.

The cobalt sulfate-containing aqueous solution 11 is preferably an aqueous solution in which the cobalt sulfate can stably exist, and is preferably weakly acidic or neutral. The cobalt sulfate-containing aqueous solution 11 may contain a substance other than the cobalt sulfate and water. In a case where the cobalt sulfate-containing aqueous solution 11 contains an insoluble matter, the insoluble matter may be removed by filtration or the like in advance of the crystallization step 10. It is preferable that the type, concentration, and the like of the substance coexisting with the cobalt sulfate in the cobalt sulfate-containing aqueous solution 11 are appropriately adjusted, and these may be removed or added as necessary.

An initial concentration of the cobalt sulfate-containing aqueous solution 11 in the crystallization step 10 is not particularly limited, but the cobalt sulfate-containing aqueous solution 11 is preferably an aqueous solution containing 5wt% to 25wt% of cobalt sulfate and more preferably an aqueous solution containing 15wt% to 25wt% of cobalt sulfate. By evaporating moisture from the cobalt sulfate-containing aqueous solution 11, a concentration of solutes such as cobalt sulfate can be increased to precipitate the cobalt sulfate crystals.

As the concentration of the cobalt sulfate-containing aqueous solution 11 which is supplied to a crystallizer approaches a saturated solubility, the cost, the operating time, and the like required for the evaporative concentration can be reduced. However, in a case where the concentration of the cobalt sulfate-containing aqueous solution 11 is at the saturated solubility or in a supersaturated state, crystal precipitation occurs during the pre-step such as the extraction step or during transfer to the crystallizer for performing the evaporative concentration, and as a result, handling becomes difficult.

It is preferable that the cobalt sulfate-containing aqueous solution 11 contains 15wt% to 25wt% of cobalt sulfate which is obtained by treating a lithium-ion battery waste material containing at least cobalt with a solvent extraction method. Since the cobalt sulfate-containing aqueous solution 11 contains the cobalt sulfate extracted from the waste material, the resources can be effectively used.

In the evaporative concentration, a method of evaporating moisture is not particularly limited, but it is preferable to perform a decompression operation, a heating operation, or both for promoting evaporation. It is known that in the crystallization operation by evaporative concentration at a liquid temperature of approximately 40°C to 45°C, there is a possibility that the crystals of the cobalt sulfate heptahydrate to be precipitated may be changed to cobalt sulfate hexahydrate at a liquid temperature of approximately 40°C or higher, and the cobalt sulfate hexahydrate or the cobalt sulfate monohydrate is precipitated at a liquid temperature of 45°C or higher. Therefore, in order to precipitate the crystals of the cobalt sulfate heptahydrate, crystallization is preferably performed at approximately 40°C or lower. As an operation of providing an amount of heat necessary for heating the cobalt sulfate-containing aqueous solution 11 and evaporating moisture in the aqueous solution in the crystallizer, an operation of adjusting the temperature of a wall surface or the like of the crystallizer using a heat medium such as warm water or steam, or an operation of an external circulation method in which a part of the liquid in the crystallizer is extracted and heated in a heat exchanger or the like and returned to the crystallizer may be used.

The step of supplying the cobalt sulfate-containing aqueous solution 11 to the crystallizer and the crystallization step in the crystallizer may be continuous or batchwise. In order to crystallize and precipitate the cobalt sulfate heptahydrate, the evaporative concentration and crystallization are preferably performed under the conditions of an absolute pressure of 4.5 to 5.5 kPa and 30°C to 40°C, and more preferably performed under the conditions of an absolute pressure of 4.9 to 5.1 kPa and 34°C to 36°C.

In a case where the evaporative concentration is performed under reduced pressure, a part of moisture contained in the cobalt sulfate-containing aqueous solution 11 is removed as a water vapor 13. By reducing the pressure to an appropriate pressure with respect to a saturated vapor pressure, the evaporation of moisture is promoted. In a case where the concentration of the cobalt sulfate-containing aqueous solution 11 is increased from the initial concentration due to the evaporation of moisture, the cobalt sulfate crystals are precipitated, and the slurry 12 containing the cobalt sulfate crystals is generated in the crystallizer.

A specific type of the crystallization apparatus of the crystallization step 10 is not particularly limited, but the crystallizer may be a crystallizer having a stirring function such as a crystallizer having a cylindrical draft tube structure therein, and a double propeller type crystallizer having a structure with propellers in which a direction of inner blades of that tube and a direction of outer blades of the tube are opposite to each other or the like may be applied as the crystallizer. An outlet for discharging the slurry 12 may be provided, for example, at the lower part of the crystallizer, below a liquid level of the cobalt sulfate-containing aqueous solution 11.

The operation of supplying the cobalt sulfate-containing aqueous solution 11 from an inlet of the crystallizer and discharging the slurry 12 from the outlet of the crystallizer may be performed intermittently, but is preferably performed continuously as described below because an equipment configuration can be simplified. As specifically described later, the slurry 12 is subjected to solid-liquid separation in the separation step 20 to be separated into a dewatered cake 21 of cobalt sulfate crystals and a filtrate 22 which is a saturated aqueous solution. At least a part of the filtrate 22 is discharged to the outside of the system as a purged filtrate 24 in order to suppress the concentration of the impurities that occur when used in the liquid circulation between the crystallization step 10 and the separation step 20. The remaining filtrate 22 is supplied to the crystallizer of the crystallization step 10 as a returned filtrate 23.

### <Separation step>

The separation step 20 is a step of subjecting the slurry 12 obtained in the crystallization step 10 to solid-liquid separation to obtain a dewatered cake 21 of cobalt sulfate crystals.

A solid-liquid separator used in the separation step 20 is not particularly limited, but examples thereof include a centrifugal separator and a filter, and a continuous centrifugal separator is particularly preferable. The cobalt sulfate crystals separated from the filtrate 22 are deposited on a filter material to form the dewatered cake 21. As the filter material, a filter paper, a filter cloth, or the like can be used, but a perforated basket or a metal screen is preferably used, and a metal screen is particularly preferably used in a continuous centrifugal separator. As a result, the dewatered cake 21 can be efficiently collected from the slurry 12, and the subsequent drying step can be stably operated.

As a method of separating the slurry 12, a physical action such as centrifugation, suction, pressurization, and making a vacuum can be used. In order to suppress the loss of the crystal water of the cobalt sulfate heptahydrate due to the efflorescence, it is preferable that an amount of moisture attached to the dewatered cake 21 is appropriately left in the dewatered cake 21 in accordance with the drying conditions of the next step. As a solid-liquid separator, since the amount of moisture attached to the dewatered cake 21 can be easily adjusted, it is preferable to use a centrifugal separator capable of adjusting a centrifugal force by changing a rotation speed. The centrifugation operation may be performed under atmospheric pressure conditions or may be performed under appropriate decompression conditions.

The temperature of the slurry 12 in the separation step 20 is not particularly limited, but in a case where the temperature exceeds 40°C, there is a possibility that the cobalt sulfate heptahydrate may be changed to the cobalt sulfate hexahydrate. Therefore, the temperature of the slurry 12 in the solid-liquid separation is preferably 40°C or lower, more preferably 25°C to 40°C, and still more preferably 30°C to 40°C.

In a case where the continuous centrifugal separator is used as the solid-liquid separator, as the slurry 12 is supplied onto the filter material such as a metal screen which is rotating, the slurry 12 is separated into the dewatered cake 21 and the filtrate 22 by the action of the centrifugal force, the dewatered cake 21 is deposited on the metal screen, and the filtrate 22 passes through slits of the metal screen and is discharged from the solid-liquid separator. As described above, the discharged filtrate 22 may be supplied to the crystallization step 10 as the returned filtrate 23 or may be supplied as the purged filtrate 24, depending on the concentration of the impurities in the filtrate 22. The purged filtrate 24 can be returned to the purification step, the extraction step, or the like to collect the cobalt sulfate contained in the purged filtrate 24.

The operation of discharging the dewatered cake 21 from the solid-liquid separator is not particularly limited, but the dewatered cake 21 may be discharged intermittently as in a batch-type centrifugal separator. In a case where the dewatered cake 21 is discharged intermittently, it is preferable that the dewatered cake 21 is discharged to a fixed quantity supply device such as a circle feeder and the dewatered cake 21 can be continuously supplied to the subsequent drying step. In a case where the continuous centrifugal separator is used, the centrifugal force acts on a tangential velocity of the dewatered cake 21 during the operation of discharging the dewatered cake 21, and the dewatered cake 21 is dispersed and discharged from a discharge unit of the separator in a state of having a velocity. Therefore, by directly connecting the discharge unit to an air transport line in front of the inlet of the flash dryer used in the next step, the dewatered cake 21 can be continuously supplied in a state of being dispersed in the air flow. In addition, since the fixed quantity supply device or the like is also not necessary, it is preferable to apply the continuous centrifugal separator from the viewpoint of simplifying the equipment.

In the cobalt sulfate crystals contained in the dewatered cake 21 after the solid-liquid separation, the amount of attached moisture other than crystal water is preferably 1.0wt% to 3.0wt%. By adjusting the amount of attached moisture, the efflorescence of the cobalt sulfate crystals can be suppressed in conjunction with the drying temperature control in the drying step 30 described later.

### <Drying step>

The drying step 30 is a step of drying the dewatered cake 21 obtained in the separation step 20 by a flash drying of bringing the dewatered cake 21 into direct contact with a drying medium 31 to obtain a cobalt sulfate crystal 41.

The efflorescence of the cobalt sulfate crystal 41 is a phenomenon in which at least a part of the crystal water is released into the surrounding atmosphere by a relationship with a relative humidity in the surrounding atmosphere. Therefore, the progress of the efflorescence is also affected by the amount of moisture contained in the surrounding atmosphere. In a case where the cobalt sulfate crystals 41 are filled in a space having a limited amount of air, such as a sealed container, the cobalt sulfate crystals 41 can be prevented from being subjected to the efflorescence.

By drying the cobalt sulfate crystal 41 by the flash drying, the efflorescence of the cobalt sulfate crystal 41 can be suppressed. In the flash drying, since the air which is the drying medium 31 comes into direct contact with the cobalt sulfate crystal 41 to be treated, the moisture attached to the cobalt sulfate crystal 41 can be effectively removed. As a result, the cobalt sulfate crystal 41 can be dried while suppressing the efflorescence due to the loss of crystal water.

In order to suppress the efflorescence of the cobalt sulfate crystal 41, it is important to shorten the contact time with the drying medium 31. As a drying method by direct contact with the drying medium 31, a fluidized bed dryer or the like can be used, but the contact time with the drying medium 31 is long and thus the efflorescence occurs in such an apparatus. Therefore, in the drying step 30, it is preferable to use a spiral flow dryer having a spiral shape or a loop shape or a flash dryer, which makes it possible to shorten the contact time with the drying medium 31. As a result, the dewatered cake 21 is fed into the air transport line through which the drying medium 31 flows rapidly, and thus a mixed state of the drying medium 31 and the dewatered cake 21 is formed instantaneously. Accordingly, the drying efficiency is increased and the drying time is shortened, and thus the contact time with the drying medium 31 can be shortened and the loss of crystal water can be suppressed.

As the spiral flow dryer, for example, a dryer having a flow path formed in a swirling shape such as a spiral shape or a loop shape and forming a spiral flow along the flow path is preferable.

The spiral flow path has, for example, a shape which spirally extends from an outer peripheral portion of the apparatus toward a central portion of the apparatus on a plane. The loop-shaped flow path has a shape which spirally extends on the same air transport line, such as a circular shape and an elliptical shape. In the loop-shaped flow path, the drying medium 31 and the dewatered cake supplied to the loop-shaped flow path may be discharged from the device outlet in one pass without looping the flow path, depending on the dried state of the dewatered cake 21.

The shape of the flow path of the air transport line through which the drying medium 31 and the dewatered cake 21 flow may be linear as in the flash dryer, but in a case where it is intended to ensure the same retention time of the dewatered cake 21 in the dryer, an installation area of the dryer can be reduced by adopting the swirling shape as the shape of the flow path.

In the drying step 30, it is preferable to use a mechanism of adjusting a retention time of the dewatered cake 21 in the dryer. By adjusting the retention time of the dewatered cake 21 in the dryer, a humidity in the dryer can be adjusted to be constant, and thus the drying efficiency can be increased.

For example, in a case where there is a variation in particle size of the substance to be treated, the smaller the particle size of the substance to be treated is, the larger a specific surface area thereof is, and thus the easier it tends to be dried. Therefore, by adopting a dryer having a mechanism capable of adjusting the retention time such that the retention time is long in a case of the substance to be treated having a large particle size and the retention time is short in a case of the substance to be treated having a small particle size, it is possible to suppress variation in degree of drying.

Examples of the mechanism of adjusting the retention time include a mechanism such as a spiral flow dryer of moving the substance to be treated from the outer peripheral side of the mechanism having a large flow path radius to the inner peripheral side of the mechanism having a small flow path radius by a spiral flow. In this case, a mechanism may be provided in which a larger-mass substance to be treated is moved from the inner peripheral side of the mechanism to the outer peripheral side of the mechanism by the action of the centrifugal force due to the spiral flow and the mass of the substance to be treated. Specifically, as in the spiral flow dryer of Patent Document 3, a mechanism having a structure in which a spiral flow path is formed from the outer peripheral side of the mechanism to the inner peripheral side of the mechanism, and an opening portion such as an openable and closable damper is provided in a portion of the partition wall between the outer peripheral side flow path and the inner peripheral side flow path may be provided. By adjusting the retention time by this mechanism and adjusting the amount of moisture attached to the dewatered cake, it is possible to make the efflorescence unlikely to occur. The outlet of the spiral flow path provided on the inner peripheral side can be disposed in the central portion of the spiral shape.

A temperature of the drying medium 31 in the flash drying is not particularly limited, but is preferably in a range of 25°C to 65°C. By adjusting the temperature of the drying medium 31, the efflorescence of the dewatered cake 21 can be suppressed.

The flow velocity of the drying medium 31 in the flash drying is not particularly limited, but is preferably 10 to 50 m/sec and more preferably 15 to 30 m/sec. The flow velocity of the drying medium 31 is adjusted to suppress the efflorescence of the dewatered cake 21, similar to the adjustment of the amount of moisture attached to the dewatered cake 21 and the adjustment of the temperature of the drying medium 31.

A filling facility for the cobalt sulfate crystal 41 obtained as a product may be provided on the outlet side of the dryer. For example, when a powder collection device for collecting the cobalt sulfate crystals 41, such as a cyclone or a bag filter, is provided at the outlet of the drying step 30, so that the cobalt sulfate crystal 41 and the drying medium 31 can be separated from each other. A fixed quantity discharge device such as a rotary valve may be installed below the cyclone or the bag filter to fill a container such as a flexible container bag with the cobalt sulfate crystals 41. In addition, since the flow velocity of the drying medium 31 is approximately the same as that of the pneumatic equipment, the dryer can also be used as an air transporter for the cobalt sulfate crystal 41.

According to the production method of the embodiment, it is possible to provide a method for producing a cobalt sulfate crystal, which is capable of suppressing the efflorescence of cobalt sulfate crystals. A purity of the crystals of the cobalt sulfate heptahydrate in the cobalt sulfate crystals can also be set to a mass fraction of 99.9% or more by removing the moisture attached to the crystals. It is expected that the effect of suppressing the fraction of the cobalt sulfate heptahydrate subjected to the efflorescence to be changed to the cobalt sulfate hexahydrate during the drying operation is exhibited, and thus the purity of the cobalt sulfate heptahydrate can be increased.

The use of the cobalt sulfate heptahydrate crystal produced by the production method of the embodiment is not particularly limited, and examples thereof include a raw material for a chemical product such as a cobalt compound, a raw material for an industrial product such as a lithium-ion battery, a catalyst, and a pharmaceutical raw material.

### [Reference Signs List]

10: Crystallization step
11: Cobalt sulfate-containing aqueous solution
12: Slurry
20: Separation step
21: Dewatered cake
30: Drying step
31: Drying medium
40: Method for producing cobalt sulfate crystal
41: Cobalt sulfate crystal

## Claims

1. A method for producing a cobalt sulfate crystal, which is performed for obtaining crystals of a cobalt sulfate heptahydrate from a cobalt sulfate-containing aqueous solution, the method comprising:
a crystallization step of subjecting a cobalt sulfate-containing aqueous solution to evaporative concentration to obtain a slurry containing cobalt sulfate crystals;
a separation step of subjecting the slurry obtained in the crystallization step to solid-liquid separation to obtain a dewatered cake of the cobalt sulfate crystals; and
a drying step of drying the dewatered cake obtained in the separation step by a flash drying of bringing the dewatered cake into direct contact with a drying medium to obtain the cobalt sulfate crystals.

2. The method for producing a cobalt sulfate crystal according to Claim 1,
wherein, in the drying step, a spiral flow dryer is used.

3. The method for producing a cobalt sulfate crystal according to Claim 1 or 2,
wherein, in the drying step, a mechanism of adjusting a retention time of the dewatered cake in a dryer is used.

4. The method for producing a cobalt sulfate crystal according to any one of Claims 1 to 3,
wherein a temperature of the drying medium is 25°C to 65°C.

5. The method for producing a cobalt sulfate crystal according to any one of Claims 1 to 4,
wherein a flow velocity of the drying medium is 10 to 50 m/sec.

6. The method for producing a cobalt sulfate crystal according to any one of Claims 1 to 5,
wherein, in the separation step, a centrifugal separator having a perforated basket or a metal screen is used.

7. The method for producing a cobalt sulfate crystal according to any one of Claims 1 to 6,
wherein a mass fraction of the crystals of the cobalt sulfate heptahydrate, excluding crystal-attached water, is 99.9% or more.

8. The method for producing a cobalt sulfate crystal according to any one of Claims 1 to 7,
wherein the cobalt sulfate-containing aqueous solution contains 15wt% to 25wt% of cobalt sulfate.

9. The method for producing a cobalt sulfate crystal according to any one of Claims 1 to 8,
wherein the cobalt sulfate-containing aqueous solution contains 15wt% to 25wt% of cobalt sulfate which is obtained by treating a lithium-ion battery waste material containing at least cobalt with a solvent extraction method.
